Europäisches Patentamt

European Patent Office

Office européen des brevets

(11) Veröffentlichungsnummer: **0 442 136 A1**

# EUROPÄISCHE PATENTANMELDUNG

(21) Anmeldenummer: 90125325.2

(22) Anmeldetag: 22.12.90

(51) Int. Cl.5: **B29C 65/20**

(30) Priorität: 15.02.90 DE 4004658

(43) Veröffentlichungstag der Anmeldung:
21.08.91 Patentblatt 91/34

(84) Benannte Vertragsstaaten:
AT BE CH DE FR LI NL

(71) Anmelder: HÜLS TROISDORF
AKTIENGESELLSCHAFT
Postfach 11 65
W-5210 Troisdorf(DE)

(72) Erfinder: Schmid, Uwe
Schwertstrasse 42
W-4150 Krefeld(DE)

(54) Heizkeilschweissgerät.

(57) An Heizkeilschweißgeräten werden die Andruckrollen (3,6,7) zum Andrücken von Kunststoffabdichtungsbahnen (2) den erwärmten Heizkeil (1) jeweils
durch mehrere unabhängig voneinander drehbewegliche Rollen-/Kugellager gebildet, die im Bereich des
Prüfkanales einen dem Prüfkanal entsprechenden
Abstand aufweisen.

FIG.1

Rank Xerox (UK) Business Services

Die Erfindung betrifft ein Heizkeilschweißgerät mit Andruckrollen zum Schweißen von einander überlappenden Abdichtungsbahnen aus Kunststoff, wobei der warme Heizkeil zur Plastifizierung der Schweißflächen zwischen diese gebracht und die plastifizierten Schweißflächen anschließend mit Schweißdruck gegeneinander gedrückt werden und wobei die Andruckrollen sowohl eine Berührung der Abdichtungsbahnen mit dem Heizkeil gewährleisten als auch den Schweißdruck verursachen.

Die Abmessungen von Abdichtungsbahnen sind aus Gründen der Herstellung, des Transportes und des Handlings begrenzt. Deshalb werden die gewünschten Abdichtungen aus einzelnen Abdichtungsbahnen zusammengesetzt. Die Abdichtungsbahnen werden dabei überlappend verlegt und an den Überlappungsrändern miteinander verschweißt. Es gibt zwar eine Reihe von Schweißtechniken, aber nur eine in großem Umfang erprobte und bewährte Schweißtechnik. Diese erprobte und bewährte Schweißtechnik basiert auf der Verwendung eines Heizkeiles. Der Heizkeil wird erwärmt und mit den Schweißflächen in Berührung gebracht. Dadurch erwärmen sich auch die Schweißflächen der Abdichtungsbahnen. Anschließend werden die Abdichtungsbahnen an den plastifizierten Schweißflächen aneinandergedrückt. Dies bewirkt im Idealfall einen homogenen Materialübergang von einer Abdichtungsbahn in die andere, so daß nach dem Erkalten der Schweißverbindung eine feste Verbindung entsteht.

Zur Schweißnahtprüfung werden beim Schweißen von Abdichtungsbahnen für Deponiebasisabdichtungen üblicherweise Doppelnähte erzeugt. Zwischen den beiden Nähten einer Doppelnaht besteht ein Prüfkanal. Der Prüfkanal wird mit einem Druckmedium beaufschlagt. Wenn die Schweißnähte über eine bestimmte Dauer dem Druck standhalten, kann von ausreichender Qualität der Schweißnähte ausgegangen werden.

Diese Prüfung der Schweißnaht ist jedoch auch abhängig von der Ausführung der Schweißnaht. Es hat sich gezeigt, daß die Schweißnähte zum Teil äußerst ungenau geraten. Häufig läuft plastifiziertes Kunststoff material in den Prüfkanal und verschließt diesen. Dadurch ist nicht immer ein offener Prüfkanal gewährleistet. Der Erfindung liegt daher die Aufgabe zugrunde, die Schweißnaht zu verbessern. Dabei geht die Erfindung von der Überlegung aus, daß weniger das Kunststoffmaterial als die Mechanik der Schweißgeräte Ursache für die Schweißprobleme ist. Des weiteren werden die Gründe in der bisherigen Form der Andruckrollen vermutet. Diese bisherigen Andruckrollen erstrecken sich üblicherweise als einteilige Rollen über die gesamte Breite der Doppelnaht. Jede Unebenheit und auch jede Beeinträchtigung der Rollen-/Kugellagerung in einem Bereich beeinträchtigen zugleich die Rollenfunktion in ihrer Gesamtheit. Nach der Erfindung sind deshalb die Rollen in Einzelabschnitte unterteilt, die ihrerseits kugel- oder rollen- oder nadelgelagert sind. Obwohl die Andruckrollen im Bereich des Heizkeiles, dem kritischen Bereich, nämlich dem Andrücken der Schweißflächen und der Schweißdruck weit vorgeordnet sind und das Andrücken am Heizkeil nur geringen Einfluß auf die Schweißnaht haben kann, zeigt sich überraschenderweise, daß mit der erfindungsgemäßen Maßnahme eine hervorragende Wirkung auf die Schweißnaht erzielt werden kann. Durch die abschnittsweise Aufteilung und voneinander unabhängige Lagerung der Abschnitte wird sichergestellt, daß von den Rollen kein nachteiliger Einfluß, z. B. in Form von Bremsmomenten ausgehen kann. Schwergängige Rollenabschnitte können unerwünscht Relativbewegungen der unterschiedlichen Schweißflächen zueinander verursachen; desgleichen kann die Bremswirkung schlechtgängiger Rollen übermäßiges und ungleichmäßiges Andrücken dieser Rollen sowie das Wegdrücken von Flüssigmaterial verursachen. Die Einzelheiten bedürfen noch einer Untersuchung, die Ergebnisse sind jedoch zuverlässig. Insofern haben die erfindungsgemäß ausgestalteten Andruckrollen eine unerwartete Wirkung.

Jede der Rollen besitzt mindestens zwei Abschnitte, die bei Erzeugung von Schweißnähten mit einem Prüfkanal einen der Prüfkanalbreite entsprechenden Abstand voneinander oder eine der Prüfkanalbreite entsprechende Ausnehmung besitzen. Dabei kann auf jeder Seite des Prüfkanals ein unabhängig drehbeweglich gelagerter Abschnitt der Rolle angeordnet sein. Vorzugsweise sind auf jeder Seite des Prüfkanals mehrere Abschnitte angeordnet.

Von besonderem Vorteil ist die Verwendung von handelsüblichen Rollen-/Kugellagern als Andruckrollenabschnitte. Die Rollen-/Kugellager bilden dabei selbst den Rollenabschnitt. Sie werden lediglich mit einem Bolzen gehalten. Günstige Verhältnisse stellen sich vor allem dann ein, wenn beiderseits des Prüfkanals mehrere Rollenabschnitte nebeneinander angeordnet sind und diese Rollenabschnitte einen Abstand voneinander aufweisen. Vorzugsweise sind beiderseits des Prüfkanals je drei Rollenabschnitte bzw. Rollen-/Kugellager vorgesehen, die untereinander gleichfalls einen geringen Abstand aufweisen.

In der Zeichnung ist ein Ausführungsbeispiel der Erfindung dargestellt.

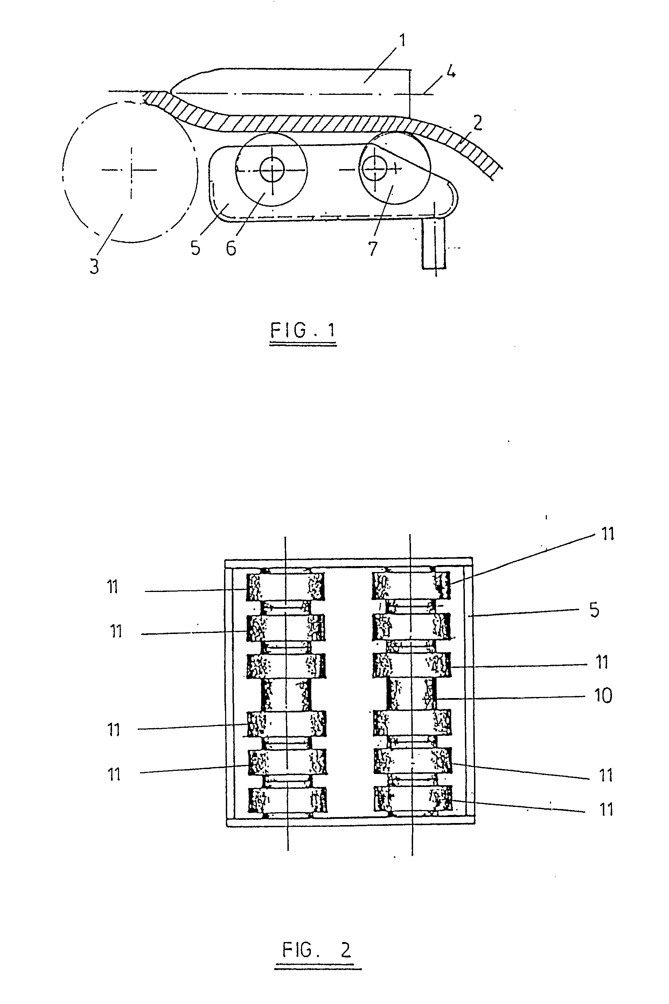

Fig. 1 zeigt eine schematische Teilansicht eines Heizkeilschweißgerätes mit einem Heizkeil 1, Andruckrollen 3, 6 und 7. Von den Andruckrollen 3 ist nur die unterhalb der Symmetrielinie 4 liegende Andruckrollen 3 dargestellt, desgleichen die unterhalb der Symmetrielinie 4 angeordneten Andruckrollen 6 und 7. Die Andruckrollen 6 und 7 sind in einem Käfig 5 gehalten. Mittels der Andruckrollen 6 und 7 wird das zu verschweißende Abdichtungsmaterial 2 gegen den erwärmten Heizkeil 1 gedrückt, so daß sich die mit dem Heizkeil 1 in Berührung kommenden Kunststoffflächen erwärmen und bei ausreichender Heizkeiltemperatur plastifiziert werden. Nach Verlassen des Heizkeiles werden dann die beiderseits des Heizkeiles 1 geführten Abdichtungsbahnenränder mit Hilfe der Andruckrollen 3 unter entsprechendem Schweißdruck aneinandergedrückt.

Nach Fig. 2 bestehen die Andruckrollen 6 und 7 aus Bolzen 10, auf denen gekapselte Rollen-/Kugellager 11 sitzen.

Es sind jeweils sechs Rollen-/Kugellager je Rolle 5 bzw. 6 vorgesehen. Die sechs Rollen-/Kugellager bilden jeweils Dreiergruppen, die einen der Prüfkanalbreite entsprechenden Abstand 12 voneinander aufweisen. Im übrigen besitzen auch die Rollen-/Kugellager 11 untereinander einen geringen Abstand.

**Patentansprüche**

1. Heizkeilschweißgerät zum Schweißen von einander überlappenden Abdichtungsbahnen mit Andruckrollen, wobei der warme Heizkeil zur Plastifizierung der Schweißflächen zwischen diese gebracht wird und die plastifizierten Schweißflächen anschließend mit Schweißdruck gegeneinander gedrückt werden und wobei Andruckrollen sowohl eine Berührung mit dem Heizkeil gewährleisten als auch den Schweißdruck verursachen, dadurch gekennzeichnet, daß die Rollen (5, 6) einzelne rollengelagerte oder nadelgelagerte Abschnitte (11) aufweisen.

2. Heizkeilschweißgerät nach Anspruch 1, dadurch gekennzeichnet, daß jede Rolle (5, 6) mindestens zwei Abschnitte mit einem Abstand (12) besitzt, der bei Erzeugung einer Schweißnaht mit einem Prüfkanal der Prüfkanalbreite entspricht.

3. Heizkeilschweißgerät nach Anspruch 2, dadurch gekennzeichnet, daß die Rollen (5, 6) durch Bolzen (10) und Rollen-/Kugellager (11) gebildet werden.

4. Heizkeilschweißgerät nach Anspruch 3, gekennzeichnet durch gekapselte Lager.

FIG. 1

FIG. 2

## EINSCHLÄGIGE DOKUMENTE

EP 90125325.2

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| Y | AT - B - 363 676 (SARNA KUNSTSTOFF AG) * Fig. 1 * | 1,3,4 | B 29 C 65/20 |
| X | | 2 | |
| Y | AT - B - 351 754 (SARNA KUNSTSTOFF AG) * Fig. 1 * | 1,3,4 | |
| X | | 2 | |
| Y | DD - A - 18 262 (SCHRECK) * Fig. 1 * | 1,3,4 | |

RECHERCHIERTE SACHGEBIETE (Int Cl⁵)

B 29 C

Der vorliegende Recherchenbericht wurde für alle Patentansprüche erstellt.

| Recherchenort | Abschlußdatum der Recherche | Prüfer |
|---|---|---|
| WIEN | 22-05-1991 | REININGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82